# EUROPÄISCHE PATENTSCHRIFT

(11) **EP 1 110 145 B1**
(45) Veröffentlichungstag und Bekanntmachung des Hinweises auf die Patenterteilung: **22.05.2002**
(21) Anmeldenummer: 99953650.1
(22) Anmeldetag: 01.09.1999
(51) Int. Cl.: G06F 11/00

(54) **VERFAHREN ZUM SICHERN VON GEBÜHRENDATEN EINER TELEFONVERMITTLUNG**
METHOD FOR SAFEGUARDING CALL CHARGE DATA OF A TELEPHONE EXCHANGE
PROCEDE POUR SAUVEGARDER DES DONNEES DE TAXATION D'UNE COMMUNICATION TELEPHONIQUE

(30) Priorität: 08.09.1998 DE 19840975
(43) Veröffentlichungstag der Anmeldung: 27.06.2001
(73) Patentinhaber: SIEMENS AKTIENGESELLSCHAFT, 80333 München (DE)
(72) Erfinder: KITTL, Herwig, A-2284 Untersiebenbrunn (AT); VALUCH, Monika, A-2130 Ebendorf (AT)
(86) Internationale Anmeldenummer: DE9902735
(87) Internationale Veröffentlichungsnummer: WO0014637

(56) Entgegenhaltungen:
- EP-A- 0 807 885
- EP-A- 0 827 065

## Beschreibung

Die Erfindung bezieht sich auf ein Verfahren zum Sichern von in einem Plattenspeicher abgespeicherten Gebührendaten einer Telefonvermittlung, bei welchem einzelne Datenblöcke von dem Plattenspeicher gelesen und mit Schreibaufträgen an zwei voneinander unabhängige, sequentielle Massenspeicher gesandt werden.

In großen Telefonvermittlungen mit vielen Teilnehmeranschlüssen fallen erhebliche Datenmengen an Gebührendaten an, typischerweise weit mehr als 100 MByte pro Tag. Da die Gebühreninformationen rasch weiterverarbeitet werden müssen, um jederzeit eine Verrechnung mit den Kunden durchführen zu können, und da die Gebührendaten erheblichen finanziellen Stellenwert besitzen, ist eine periodische Abspeicherung der Daten auf einen sequentiellen Massenspeicher, insbesondere einen Bandspeicher, erforderlich. Aus Sicherheitsgründen müssen dabei die Gebührendaten auf zwei von einander unabhängigen Bandspeichern gesichert werden, so daß schließlich zwei Kopien der Gebührendaten vorliegen.

Zur Durchführung der Abspeicherung der Gebührendaten wird derzeit zunächst eine Bandkopie der Daten erstellt, die auch aus mehreren Bändern bestehen kann, und nach Beendigung dieser ersten Sicherung wird auf einem zweiten Bandgerät eine zweite Sicherungskopie der Gebührendaten der Festplatte erzeugt.

Wegen der bereits erwähnten großen Datenmengen liegt der Zeitaufwand für die Erstellung einer Sicherungskopie in der Größenordnung von Stunden, oft bis zu zehn Stunden, wobei für die Erstellung der zweiten Sicherungskopie natürlich noch einmal soviel Zeit benötigt wird. Im Hinblick darauf, daß eine Sicherung täglich oder zweimal täglich erwünscht bzw. gefordert wird, gelangt man an die Grenze der Durchführbarkeit. Da die Gebührendaten üblicherweise aus einer zyklischen Datei abgezogen werden, besteht bei den langen Kopierzeiten die Gefahr, daß Gebührendaten durch Überschreiben verlorengehen.

Eine Aufgabe der Erfindung liegt darin, den oben genannten Problemen zu begegnen, die ihren Ursprung zum Teil darin haben, daß bei einer Telefonvermittlung ein Echtzeitsystem mit hohem Datenfluß vorliegt.

Die Aufgabe wird, ausgehend von einem Verfahren der eingangs genannten Art dadurch gelöst, daß erfindungsgemäß je ein von dem Plattenspeicher gelesener Datenblock zusammen mit einem Schreibauftrag sowohl an den ersten als auch den zweiten bzw. einen weiteren Massenspeicher gesandt wird, und nach Eintreffen einer Rückmeldung sowohl seitens des ersten als auch des zweiten Massenspeichers der nächste, von dem Plattenspeicher gelesene Datenblock zusammen mit Schreibaufträgen an beide Massenspeicher gesandt wird.

Die Erfindung wie in Patentanspruch 1 definiert, bietet unter anderem den Vorteil, daß die Daten nur ein einziges Mal von der Festplatte gelesen werden müssen, so daß durch die entsprechende Reduktion der Plattenzugriffe eine erhebliche Entlastung des Systems erreicht wird. Da die beiden Massenspeicher, z.B. Bandgeräte, den Schreibauftrag unabhängig voneinander, aber gleichzeitig durchführen können, muß nicht zweimal auf die Beendigung der einzelnen Schreibaufträge gewartet werden. Insgesamt ist die Erstellung zweier identischer Sicherungskopien mit wesentlich verringertem System- und Zeitaufwand möglich, genauer gesagt ist hier eine Reduzierung bis fast auf die Hälfte erzielbar.

Die abhängigen Ansprüche 2 bis 4 spezifizieren zweckmäßige Ausgestaltungen des Gegenstandes ihres Hauptanspruchs.

Im Sinne der Verringerung des Zeitaufwandes ist es folglich auch zweckmäßig, wenn die Schreibaufträge mit den Datenblökken gleichzeitig an beide Massenspeicher gesandt werden.

Um auch bei Störung eines Massenspeichers eine Datensicherung zu ermöglichen, kann vorgesehen sein, daß bei Vorliegen einer Fehlermeldung seitens eines gestörten der beiden Massenspeicher die einzelnen Datenblöcke mit den Schreibaufträgen nacheinander an den ungestörten Massenspeicher gesandt werden.

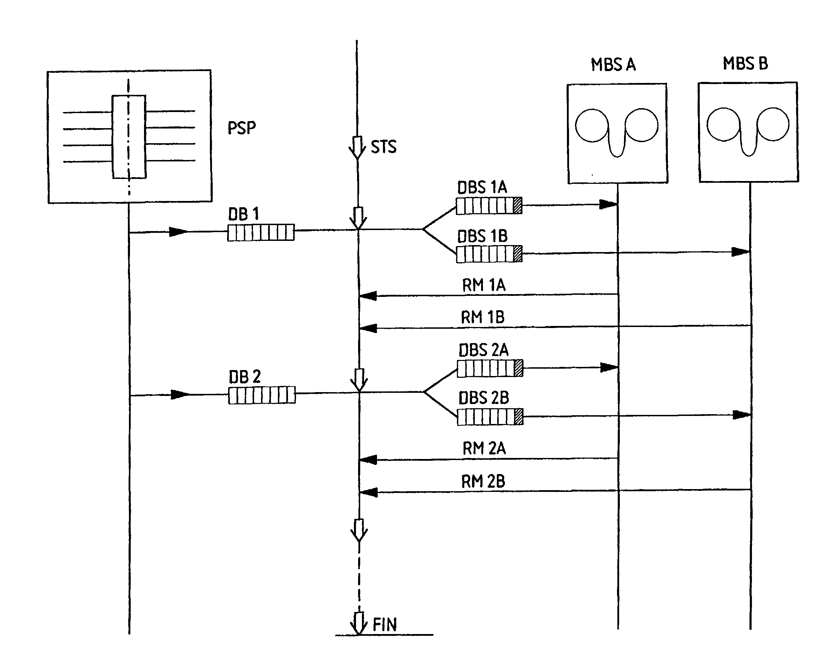

Die Erfindung samt weiterer Vorteile ist im folgenden an Hand eines Ausführunsbeispiels unter Zuhilfenahme der Zeichnung näher erläutert. Diese zeigt in einer einzigen Figur schematisch die Erstellung von zwei Sicherungskopien der Gebührendaten einer Telefonvermittlung, die auf einem Plattenspeicher vorliegen.

In der Figur sind schematisch ein Plattenspeicher PSP, sowie als sequentielle Massenspeicher zwei Magnetbandspeicher MBS A, MBS B gezeigt. Diese Speicher befinden sich in bzw. bei einer nicht näher gezeigten Telefonvermittlung mit vielen Teilnehmeranschlüssen, wobei große Mengen an Gebührendaten anfallen. Die Gebührendaten, oft mehr als 100 MByte pro Tag, werden in einem Plattenspeicher (Festplatte) geschrieben, und liegen dort in Datenblöcken von z.B. 14 kByte Länge vor.

Zur Erstellung von zwei Sicherungskopien der Gebührendaten auf Band sieht die Erfindung nun vor, daß auf ein Startsignal STS hinauf der Kopierprozeß gestartet und ein erster Datenblock DB 1 von dem Plattenspeicher PSP gelesen wird. Dieser Datenblock wird mit einem Schreibauftrag für den ersten Magnetbandspeicher MBS A bzw. einem Schreibauftrag für den zweiten Magnetbandspeicher MBS B versehen und in Datenblöcken DBS 1A, DBS 1B an die Magnetbandspeicher MBS A, MBS B gesandt. Nach Erledigung der Schreibaufträge erfolgen von den Bandspeichern Rückmeldungen RM 1A, RM 1B, die dazu führen, daß für die Sicherung des nächsten (zweiten) Datenblocks DB 2, dieser aus dem Plattenspeicher PSP gelesen wird, mit Schreibaufträgen versehen wird und in Form von Datenblöcken DBS 2A, DBS 2B an die Bandspeicher MBS A, MBS B gesandt wird.

Nach erfolgter Abspeicherung erfolgen wieder Rückmeldungen RM 2A, RM 2B, und es beginnt die Sicherungsprozedur eines dritten Datenblocks, u.s.f., bis sämtliche Datenblöcke abgearbeitet sind, und letztlich ein Signal FIN das Ende der Prozedur bekannt gibt.

Die Schreibaufträge mit den Datenblöcken, d.h. die Datenblökke DBS 1A, DBS 1B, etc. werden zweckmäßigerweise immer gleichzeitig an beide Bandspeicher MBS A, MBS B gesandt, was allerdings nicht bedeutet, daß auf die Rückmeldungen RM 1A, RM 1B, etc. gleichzeitig oder in einer bestimmten Reihenfolge erfolgen müssen, da die Zeitdauer für das Abspeichern auf den Bandgeräten prinzipiell unterschiedlich sein kann.

Sollte allerdings eine Rückmeldung von einem der beiden Bandspeicher innerhalb einer vernünftigen Zeitspanne nicht eintreffen, muß eine Entscheidung über den weiteren Verfahrensablauf getroffen werden, beispielsweise dahingehend, daß die Abspeicherung des entsprechenden Datenblocks erneut versucht wird oder daß einfach auf den nächsten Datenblock übergegangen wird.

Wird jedoch eine schwerwiegende Störung eines der beiden Bandspeicher MBS A, MBS B erkannt, so wird eine Fehlermeldung abgegeben, und das Verfahren wird mit dem ungestörten Bandspeicher alleine durchgeführt, um in diesem Fall eine einzige Sicherungskopie zu erhalten. Andererseits kann bei Störung eines der beiden Bandspeicher auch auf einen dritten, in Reserve gehaltenen Magnetbandspeicher ausgewichen werden, welcher dann an die Stelle des gestörten Gerätes tritt.

Wenngleich die Erfindung im Zusammenhang mit Magnetbandspeichern beschrieben wurde, kommen auch andere sequentielle bzw. sich sequentiell verhaltende Massenspeicher in Frage, wie z.B. Speicher mit magneto-optischen Platten.

Auf die beschriebene Weise wird die Herstellung von zwei Sicherungskopien eines Gebührendatensatzes mit großer Datenmenge ermöglicht, ohne das System übermäßig zu belasten. Dabei erweist sich vor allem die praktisch auf die Hälfte reduzierte Anzahl von Plattenzugriffen als sehr vorteilhaft. Die oft geforderte Herstellung von Sicherungskopien zweimal täglich wird dadurch auch in großen Telefonvermittlungen möglich. Die Erfindung ist selbstverständlich nicht auf die Herstellung von lediglich zwei Kopien eingeschränkt, da in besonderen Anwendungsfällen auch drei oder mehr Kopien gefordert werden können.

## Patentansprüche

1. Verfahren zum Sichern von in einem Plattenspeicher (PSP) abgespeicherten Gebührendaten einer Telefonvermittlung, bei welchem einzelne Datenblöcke (DB 1, DB 2 ,...) von dem Plattenspeicher gelesen und mit Schreibaufträgen an zwei voneinander unabhängige, sequentielle Massenspeicher (MBS A, MBS B) gesandt werden,
**dadurch gekennzeichnet,**
**daß** je ein von dem Plattenspeicher (PSP) gelesener Datenblock (DB 1) zusammen mit einem Schreibauftrag sowohl an den ersten als auch den zweiten bzw. einen weiteren Massenspeicher (MBS A, MBS B) gesandt wird, und nach Eintreffen einer Rückmeldung (RM 1A, RM 1B ,...) sowohl seitens des ersten (MBS A) als auch des zweiten (MBS B) Massenspeichers der nächste, von dem Plattenspeicher gelesene Datenblock (DB 2) zusammen mit Schreibaufträgen an beide Massenspeicher gesandt wird.

2. Verfahren nach Anspruch 1,
**dadurch gekennzeichnet, daß** die Schreibaufträge mit den Datenblöcken gleichzeitig an beide Massenspeicher (MBS A, MBS B) gesandt werden.

3. Verfahren nach Anspruch 1 oder 2,
**dadurch gekennzeichnet, daß** bei Vorliegen einer Fehlermeldung seitens eines gestörten der beiden Massenspeicher die einzelnen Datenblöcke mit den Schreibaufträgen nacheinander an den bzw. die ungestörten Massenspeicher gesandt werden.

4. Verfahren nach einem der Ansprüche 1 bis 3,
**dadurch gekennzeichnet, daß** die sequentiellen Massenspeicher (MBS A, MBS B) Magnetbandspeicher sind.

## Claims

1. Method for backing up call charge data, stored in a disk storage (PSP), of a telephone switching office, in which individual data blocks (DB 1, DB 2, ...) are read by the disk storage and are transmitted, with write orders, to two sequential mass storages (MBS A, MBS B) which are independent of one another, **characterized in that** in each case a data block (DB 1) which is read by the disk storage (PSP) is transmitted, together with a write order, both to the first and to the second or a further mass storage (MBS A, MBS B), and after an acknowledgment (RM 1A, RM 1B, ...) is received both by the first mass storage (MBS A) and also by the second mass storage (MBS B), the next data block (DB 2) read by the disk storage is transmitted, together with write orders, to both mass storages.

2. Method according to Claim 1, **characterized in that** the write orders are transmitted to both mass storages (MBS A, MBS B) simultaneously with the data blocks.

3. Method according to Claim 1 or 2, **characterized in that** when a fault message is present at one of the two mass storages which is faulty, the individual data blocks are successively transmitted, with the write orders, to the nonfaulty mass storage or storages.

4. Method according to one of Claims 1 to 3, **characterized in that** the sequential mass storages (MBS A, MBS B) are magnetic tape storages.

## Revendications

1. Procédé pour sauvegarder des données de taxation d'une communication téléphonique mémorisées dans une mémoire à disques (PSP), dans le cas duquel des blocs de données (DB 1, DB 2, ...) individuels sont lus par la mémoire à disques et envoyés avec des instructions d'écriture à deux mémoires de masse (MBS A, MBS B) séquentielles et indépendantes l'une de l'autre,
**caractérisé en ce que**
un bloc de données (DB 1) lu par la mémoire à disques (PSP) est respectivement envoyé avec une instruction d'écriture aussi bien à la première mémoire de masse qu'à la deuxième, respectivement à d'autres mémoires de masse (MBS A, MBS B), et qu'après l'arrivée d'une information en retour (RM 1A, RM 1B, ...) aussi bien du côté de la première mémoire de masse (MBS A) que de la deuxième mémoire de masse (MBS B), le prochain bloc de données (DB 2) lu par la mémoire à disques est envoyé au deux mémoires de masse avec des instructions d'écriture.

2. Procédé selon la revendication 1,
**caractérisé en ce que** les instructions d'écriture sont envoyées simultanément aux deux mémoires de masse (MBS A, MBS B) avec les blocs de données.

3. Procédé selon la revendication 1 ou 2,
**caractérisé en ce que**, en cas de présence d'un message d'erreur du côté d'une mémoire de masse défaillante, les blocs de données individuels sont envoyés les uns après les autres, avec les instructions d'écriture, à la mémoire de masse non défaillante, respectivement aux mémoires de masse non défaillantes.

4. Procédé selon l'une des revendications 1 à 3,
**caractérisé en ce que** les mémoires de masse séquentielles (MBS A, MBS B) sont des mémoires à bande magnétique.
